# EUROPEAN PATENT APPLICATION

(11) **EP 4 736 657 A1**
(43) Date of publication of application: **06.05.2026**
(21) Application number: 25211843.5
(22) Date of filing: 28.10.2025
(51) Int. Cl.: A23B 4/02

(54) **PROCESS FOR SALTING A FOOD PRODUCT**

(30) Priority: 30.10.2024 IT 202400024246
(71) Applicant: Parma Technology Food di Aschieri Vilma, 43035 Felino (Parma) (IT)
(72) Inventor: RONCHEI, Francesca, 43035 FELINO (PARMA) (IT); RONCHEI, Marco, 43035 FELINO (PARMA) (IT)
(74) Representative: Bacchini, Davide

(57) **Abstract**

Process for salting a food product, comprising the steps of:
carrying out a first salting of the food product with an amount of salt comprised between 1 Kg and 4 Kg per 100 Kg of product;
vacuum sealing the salted product in a specific bag;
allowing the salted product to rest in the vacuum bag in a cold storage room at a temperature comprised between 1 °C and 3.5 °C for a period of time of at least 6 days.

## Description

The present invention relates to a process for salting a food product. In particular, the salting process which is the subject-matter of the present invention is particularly suitable as a process for maturing and preserving cured meat products (both cooked and raw).

As is known, a traditional salting process takes place with a first salting on the outer surface. Typically, the amount of salt used is equal to about half of the salt to be used overall. After the first salting, the product is placed in a cold storage room (temperature about 1÷3 °C) for a duration of 5/6 days in order to allow the osmotic process of absorption of the salt by the food.

It is customary to repeat the operation a second time.

Then the product is extracted from the cold storage room and the residual salt is removed from the surface. Subsequently, the product must be massaged to promote the uniform distribution of the salt and repositioned in the cold storage rooms for a variable time, typically comprised between 60 and 120 days depending on the type of product and the muscle mass. Finally, the product is extracted from the cold storage rooms and hung for "hot" maturing.

As is known, the salting and resting process typically takes place before aging, which in turn precedes the marketing of the product.

Such traditional process brings therewith a series of technical-functional drawbacks, which briefly consist of:
- the medium-long times necessary to obtain the osmotic process of the product following the salting process;
- the uneven absorption of salt by the product
- the amount of salt needed to complete the process;
- the consequent high salt content of the final product;
- strict compliance with the times marked by the salting steps.

Furthermore, the use of large amounts of salt involves a substantial residue whose disposal is laborious and economically expensive (given the impossibility of discharging the washing water into the sewer).

Often, in order to reduce production times and costs, a second salting is omitted, compromising the quality of the product.

The number, duration and complexity of the operations require a high number of hours of work and the employment of highly qualified employees.

In this context, the technical task underlying the present invention is to propose a process for salting a food product which obviates the drawbacks in the known art as described above.

In particular, it is an object of the present invention to provide a process for salting a food product, which consistently reduces both the amount of salt used and the overall times of the conservation process, with respect to traditional processes.

Another object of the present invention is to propose a process for salting a food product, which is reproducible, which offers constant results and guarantees a high quality of the product.

A further object of the present invention is to provide a process for salting a food product, which ensures a homogeneous distribution of the salt in the food product, while avoiding the step of massaging the product of traditional processes.

A further object of the present invention is to propose a process for salting a food product, which makes the final product also usable by consumers who, for reasons of diet or health, intend to eat foods with a low salt content.

The stated technical task and specified objects are substantially achieved by a process for salting a food product, comprising the steps of:
carrying out a first salting of the food product with an amount of salt comprised between 1 Kg and 4 Kg per 100 Kg of product;
vacuum sealing the salted product in a specific bag;
allowing the salted product to rest in the vacuum bag in a cold storage room at a temperature comprised between 1 °C and 3.5 °C for a period of time of at least 6 days.

In accordance with a first embodiment, the first salting is the only salting that is carried out in the salting process, and the step of allowing the salted product to rest in the vacuum bag in a cold storage room at a temperature comprised between 1 °C and 3.5 °C takes place over a period of time comprised between 8 and 15 days.

More preferably, it takes place for a period of time comprised between 12 and 15 days.

In accordance with a second embodiment, the process comprises a step of removing the product from the vacuum bag, carrying out a second salting of the food product with an amount of salt comprised between 1 Kg and 4 Kg per 100 Kg of product and an additional subsequent step of vacuum sealing the salted product in another bag and allowing the salted product to rest in the vacuum bag in a cold storage room.

According to one aspect of the invention, the step of allowing the salted product to rest in the vacuum bag in a cold storage room after the first salting takes place over a period of time comprised between 6 and 8 days. According to one aspect of the invention, the step of allowing the salted product to rest in the vacuum bag in a cold storage room after the second salting takes place over a period of time comprised between 6 and 8 days. According to one aspect of the invention, the salting process comprises a step of removing the product from the vacuum bag and a subsequent step of vacuum sealing again the food product in a bag without performing a second salting and allowing it to rest in the vacuum bag in a cold storage room.

In accordance with a third embodiment, the salting process comprises a step of allowing the salted product to rest in a cold storage room at a temperature comprised between 1 °C and 3.5 °C for a period of time comprised between 5 and 30 days, outside of a vacuum bag. This step takes place between the step of carrying out a first salting and the step of vacuum sealing the food product in a bag.

According to one aspect of the invention, the step of allowing the salted product to rest in the vacuum bag in a cold storage room at a temperature comprised between 1 °C and 3.5 °C takes place over a period of time comprised between 15 and 25 days.

According to one aspect of the invention, the step of carrying out a first salting takes place with an amount of salt comprised between 3 Kg and 4 Kg per 100 Kg of product.

The process for salting a food product, according to the present invention, is described below.

Such a process can be applied on any food product which can be preserved by salting. In particular, food products refer to meat, cheese, and fish products. Advantageously, the process has been designed and extensively tested on cured meat products.

The salting process comprises a step of carrying out a first salting of the food product with an amount of salt comprised between 1 Kg and 4 Kg per 100 Kg of product. Preferably, the amount of salt is comprised between 1.5 Kg and 3.5 Kg per 100 Kg of product.

The salting process comprises a step of allowing the salted product to rest in a special bag and a step of allowing the product to rest in the vacuum bag in a cold storage room at a temperature comprised between 1 °C and 3.5 °C for an average period of time comprised between 6 and 15 days. The time the salted product remains in the vacuum bag is dependent on the size (weight) thereof.

The combination of a weighed salting as specified and the rest in the vacuum bag in the cold storage room allows to obtain a salted food product in a uniform manner (homogenisation of the salt in the muscle mass).

Preferably, the ambient conditions of the cold storage room are set at a minimum temperature of 1 °C, a maximum temperature of 3.5 °C and a relative humidity comprised between 65 and 85. The values chosen depend on the salting process used.

In accordance with a first embodiment, the aforesaid first salting is the only salting that takes place during the salting process. The step of resting under vacuum in the cold storage room takes place for an average period of time comprised between 8 and 15 days, more preferably between 12 and 15 days.

Without prejudice to the advantage of uniform salting common to all embodiments that will be specified below and guaranteed by the use of vacuum bag, this first embodiment also allows to obtain a product with a low salt content, with a reduced process duration with respect to the traditional one.

Summarising, according to the first embodiment, a first salting of the food product is carried out as indicated above, the salted product under vacuum is placed in a special bag and the salted product under vacuum is allowed to rest in a cold storage room at a temperature comprised between 1 °C and 3.5 °C for a period of time comprised between 8 and 15 days (the time allowed to rest under vacuum is dependent on the weight of the salted product).

According to one embodiment, the salting process comprises a further step of allowing the product to rest in a vacuum bag in a cold storage room. This step follows the first rest in a vacuum bag in a cold storage room.

In other words, in this variant, the product is first salted as indicated and allowed to rest in the vacuum bag in the cold storage room. It is then removed from the first bag (for example, to remove any liquids expelled during resting) and placed back in a vacuum bag to rest in the cold storage room.

Alternatively, a second salting can be carried out using significantly less salt than the first (at least half), before placing the product in the vacuum bag for the second time.

In accordance with a second embodiment, the salting process comprises a step of carrying out a second salting of the food product with an amount of salt comprised between 1 Kg and 4 Kg per 100 Kg of product. Preferably, the amount of salt is comprised between 1.5 Kg and 3.5 Kg per 100 Kg of product.

The second salting takes place after the step of allowing the product to rest in a vacuum bag.

Preferably, the step of vacuum sealing the salted product and the step of allowing the vacuum sealed product to rest in the cold storage room are repeated a second time.

For clarity, it will be indicated with "first step" when it occurs after the first salting and with "second step" when it occurs after the second salting.

In this second embodiment, the first step of allowing the product to rest in a vacuum bag in a cold storage room at a temperature comprised between 1 °C and 3.5 °C takes place for an average period of time comprised between 6 and 8 days.

Advantageously, the second step of allowing the product to rest in a vacuum bag in a cold storage room at a temperature comprised between 1 °C and 3.5 °C (i.e. the resting step after the second salting) takes place for an average period of time comprised between 6 and 8 days.

Without prejudice to the advantage of uniform salting, with this second embodiment, a product with high organoleptic quality is obtained. The process guarantees a high-quality product.

Summarising, in this second embodiment, the food product undergoes the following operations:
- it is salted a first time as described above;
- it rest in a vacuum bag a first time for a period of time preferably comprised between 6 and 8 days;
- it is removed from the bag, the remaining salt is removed and a second salting is carried out as described above;
- it is again vacuum sealed in a special bag and placed in a cold storage room to rest a second time, preferably for a period of time comprised between 6 and 8 days.

By way of example, the results of one of the many tests carried out that led to establishing the technical features of the process described above, in particular the combination of the amount of salt and the time allowed to rest under vacuum necessary to achieve the intended purposes, are shown below. From the above tables, it is possible to deduce and compare the advantages obtained by the salting process which is the subject-matter of the present invention, as well as to compare the results resulting from the application of the process in its first embodiment in a single salting step with respect to the second embodiment with a double salting step.

In the example presented, the food product is a ham and the salting took place with an amount of salt equal to 1.8 Kg per 100 Kg of product. It should be noted that for each step there are four salinity values, which correspond to as many measurements at strategic points of the muscle mass of the product (*culatello, fiocco, anchetta* and femoral bone). The measurements are made at a depth of 3.5 centimetres.

For a direct comparison, it should be noted that in a traditional process the salinity at 6 days of rest after first salting amounts to about 33-36.

### First embodiment of the salting process

| Operation | Salinity | Time elapsed |
|---|---|---|
| One-time salting and resting under vacuum in the storage room | | |
| | 60 62 64 64 | 6 days |
| | 86 73 78 81 | 9 days |
| End of rest | 83 84 81 79 | 20 days |
| | 86 87 81 83 | 40 days |
| | / 83 83 84 | 8 months |

### Second embodiment of the salting process

| Operation | Salinity | Time elapsed |
|---|---|---|
| First salting and first resting under vacuum in the storage room | | |
| | 56 57 60 57 | 5 days |
| Second salting and second resting under vacuum in the storage room | | |
| | 83 80 77 78 | 10 days |
| End of rest | 84 84 78 79 | 20 days |
| | 86 85 80 83 | 40 days |
| | 86 / 83 83 | 9 months |

It is possible to notice the homogeneity of salinity throughout the ham.

In accordance with a third embodiment, the salting process comprises a step of resting the food product in a cold storage room. In particular, this step occurs with the food product outside a vacuum bag. In other words, a vacuum bag is not used in this step.

This step occurs between the step of first salting and the step of resting the food product in a vacuum bag in a cold storage room.

In other words, in this embodiment the product is salted, is put to rest in a cold storage room and then put in a vacuum bag.

Preferably, the resting step outside the bag lasts for a period of between 5 and 30 days. Preferably, the resting step outside the bag lasts for a period of between 20 and 25 days.

Preferably, the resting step in the bag lasts for a period of between 15 and 25 days. Preferably, the resting step in the bag lasts for a period of around 20 days.

Preferably, the resting step outside the bag lasts for a period of between 20 and 25 days and the resting step in the bag lasts for a period of around 20 days.

Advantageously, the amount of salt used for the first salting in this embodiment is between 3 kg and 4 kg per 100 kg of product.

The combination of salting, resting outside the bag, and resting in the bag ensures a healthy product at the end of the process.

As is well known, the salting process takes place before the aging process, which in turn precedes marketing.

The present invention has numerous advantages.

From a qualitative point of view, the consistent reduction in the degree of salinity allows to obtain a product of high olfactory and organoleptic quality, reducing the "bitter" component of the salt and increasing, on the other hand, the "sweet" taste of the product.

The poor success (and, therefore, the rejection) of the product during the maturing step is significantly reduced thanks to a process that stabilises the salting result thanks to the homogeneity of the salt absorption.

Furthermore, the proposed process avoids the formation of the "burnt meat" effect, i.e. the blackening of the upper meat layer in cured meat products due to contact with saturated salt, which forms a barrier that blocks moisture inside the product.

Finally, with the proposed process it is possible to flavour the meat with special salt, as it penetrates deeply. By way of example, smoked salt can be used to give the meat the corresponding taste.

From a hygienic-sanitary point of view, the drastic decrease in salt content makes the product particularly suitable both in low-sodium diets and in diseases that require avoiding a high degree of salinity.

From an ergonomic point of view in relation to the large amounts used for commercial production, it allows savings both on the amount of salt needed for processing (from a minimum of 10% to a maximum of 40% with respect to a traditional salting process) and on the costs of disposing waste salt. With the proposed salting process, the amount of salt used can be reduced.

It favours, through the strong reduction of processing times and the different steps, savings in the use of labour (or at least its rationalization within the production process), as well as a strong reduction in the use times of the machinery.

The process in question, thanks to the lower amount of salt used, produces 2÷3% less weight drop with respect to the traditional process.

Finally, the reduction of the operations required by the process in question and their relative simplicity allows unskilled labour to carry out the execution thereof.

## Claims

**1.** A process for salting a food product, comprising the steps of:
carrying out a first salting of the food product with an amount of salt comprised between 1 Kg and 4 Kg per 100 Kg of product;
vacuum sealing the salted product in a specific bag;
allowing the salted product to rest in the vacuum bag in a cold storage room at a temperature comprised between 1 °C and 3.5 °C for a period of at least 6 days.

**2.** The salting process according to claim 1, wherein said first salting is the only salting that is carried out in the salting process, and the step of allowing the salted product to rest in the vacuum bag in a cold storage room at a temperature comprised between 1 °C and 3.5 °C takes place over a period of time comprised between 8 and 15 days.

**3.** The salting process according to claim 2, wherein said step of allowing the salted product to rest takes place over a period of time comprised between 12 and 15 days.

**4.** The salting process according to claim 1, comprising a step of removing the food product from the vacuum bag, a subsequent step of carrying out a second salting of the food product with an amount of salt comprised between 1 Kg and 4 Kg per 100 Kg of product and an additional subsequent step of vacuum sealing the salted product in another bag and allowing the salted product to rest in the vacuum bag in a cold storage room.

**5.** The salting process according to claim 4, wherein the step of allowing the salted product to rest in the vacuum bag in a cold storage room after the first salting takes place over a period of time comprised between 6 and 8 days.

**6.** The salting process according to claim 4 or 5, wherein the step of allowing the salted product to rest in the vacuum bag in a cold storage room after the second salting takes place over a period of time comprised between 6 and 8 days.

**8.** The salting process according to claim 1, comprising a step of removing the product from the vacuum bag and a subsequent step of vacuum sealing again the food product in a bag without performing a second salting and allowing it to rest in the vacuum bag in a cold storage room.

**9.** The salting process according to claim 1, comprising a step of allowing the salted product to rest in a cold storage room at a temperature comprised between 1 °C and 3.5 °C for a period of time comprised between 5 and 30 days, outside of a vacuum bag;
wherein this step takes place between the step of carrying out a first salting and the step of vacuum sealing the food product in a bag.

**10.** The salting process according to claim 9, wherein the step of allowing the salted product to rest in the vacuum bag in a cold storage room at a temperature comprised between 1 °C and 3.5 °C takes place over a period of time comprised between 15 and 25 days.

**11.** The salting process according to claim 9 or 10, wherein the step of carrying out a first salting takes place with an amount of salt comprised between 3 Kg and 4 Kg per 100 Kg of product.
